# FASCICULE DE BREVET EUROPEEN

(11) **EP 0 732 525 B1**
(45) Date de publication et mention de la délivrance du brevet: **23.02.2000**
(21) Numéro de dépôt: 96400528.4
(22) Date de dépôt: 14.03.1996
(51) Int. Cl.: F16F 15/123, F16F 15/129

(54) **Amortisseur de torsion à préamortisseur**
Vor-Dämpfer für Drehschwingungen
Pre-damper unit for torsional vibrations

(30) Priorité: 14.03.1995 FR 9502929; 16.02.1996 FR 9601960; 12.03.1996 EP 96103873
(43) Date de publication de la demande: 18.09.1996
(73) Titulaire: VALEO, 75017 Paris (FR)
(72) Inventeur: Viola, Paolo, 75007 Paris (FR); Tauvron, Fabrice, 91200 Athis-Mons (FR)
(74) Mandataire: Gamonal, Didier

(56) Documents cités:
- GB-A- 1 167 749
- GB-A- 2 052 682
- GB-A- 2 254 398
- US-A- 3 107 551

## Description

La présente invention concerne les amortisseurs de torsion dotés d'un préamortisseur, notamment les frictions d'embrayage pour véhicules automobiles.

Elle se rapporte à un amortisseur de torsion, notamment une friction d'embrayage pour véhicule automobile, du genre comportant un élément d'entrée solidaire de deux rondelles de guidage disposées de part et d'autre d'un premier voile, des premiers organes élastiques intervenant circonférentiellement entre le premier voile et les rondelles de guidage, un élément de sortie entouré par le premier voile et les rondelles de guidage, des moyens d'engrènement à jeu circonférentiel intervenant entre la périphérie interne du premier voile et la périphérie externe de l'élément de sortie et comprenant une denture femelle formée dans l'élément de sortie, un préamortisseur entourant l'élément de sortie et implanté, d'une part, radialement en dessous des premiers organes élastiques et, d'autre part, axialement entre l'une des rondelles de guidage et le premier voile, dans lequel ledit préamortisseur comporte deux flasques solidaires en rotation du premier voile, un second voile disposés entre les deux flasques en étant solidaire, au moins en rotation, de l'élément de sortie et des seconds organes élastiques, de plus faible raideur que les premiers organes élastiques, intervenant circonférentiellement entre le second voile et les deux flasques en étant montés dans des seconds logements pratiqués en vis-à-vis dans les flasques et le second voile.

Les flasques du préamortisseur sont identiques au moins radialement au dessus de leurs seconds logements.

Les premiers organes élastiques sont montés dans des premiers logements pratiqués en vis-à-vis dans le premier voile et les rondelles de guidage.

Les flasques ont une taille réduite par rapport aux rondelles de guidage et constituent des rondelles de guidage pour le préamortisseur. C'est donc par simplicité que les flasques sont dénommés ainsi.

Ainsi deux dispositifs amortisseur de torsion interviennent de manière étagée entre l'élément d'entrée et l'élément de sortie pour accoupler ceux-ci de manière élastique.

Le premier dispositif est plus raide que le préamortisseur, en sorte que dans une première étape, il forme un bloc par l'intermédiaire des premiers organes élastiques accouplant le premier voile aux rondelles de guidage solidaires de l'élément d'entrée destiné à être solidarisé en rotation à un arbre menant. Durant cette première phase, les seconds organes élastiques sont comprimés, car un mouvement relatif se produit entre les flasques, solidaires en rotation du premier voile, et le voile secondaire solidaire en rotation de l'élément de sortie destiné à être solidarisé en rotation à un arbre mené.

Usuellement l'élément de sortie consiste en un moyeu cannelé intérieurement pour sa liaison en rotation avec l'arbre de sortie.

Cette première phase se termine lorsque le jeu des moyens d'engrènement à jeu est annulé. Après, les seconds organes élastiques restent bandés et un mouvement relatif se produit entre les rondelles de guidage et le premier voile avec compression des premiers organes élastiques.

Un tel amortisseur est décrit dans le document GB-A-225 398 conforme au préambule de la revendication 1. Dans celui-ci les flasques sont montés dans un boîtier doté de saillies d'entraînement en rotation des flasques avec le premier voile.

En pratique les deux flasques sont liés en rotation l'un avec l'autre et assemblés par encliquetage par l'intermédiaire du boîtier. Cette disposition donne satisfaction. Néanmoins, il peut être souhaitable d'améliorer encore le fonctionnement des seconds organes élastiques de telle manière qu'ils travaillent de manière symétrique sans la présence d'un boîtier. La présente invention a pour objet de répondre à ces souhaits de manière simple et économique.

Suivant l'invention ce problème est résolu par la partie caractérisante de la revendication 1.

Ainsi les parties externes sont décalées axialement par rapport à la partie principale des flasques et ce axialement l'une vers l'autre. Ce décalage est réalisé avantageusement à l'aide d'un pli oblique.

Grâce à l'invention le boîtier de l'art antérieur est supprimé et les flasques sont standardisés puisqu'ils sont identiques au moins radialement au dessus de leurs seconds logements ce qui permet de simplifier l'outillage de fabrication des flasques notamment lorsque ceux-ci sont métalliques, en sorte que le préamortisseur est de fabrication économique.

En outre les seconds organes élastiques travaillent dans de bonnes conditions puisque la fixation mutuelle des flasques est réalisée radialement au-dessus des seconds organes élastiques qui travaillent ainsi de manière symétrique, grâce au fait que les parties externes sont fixées dans le plan du second voile.

Bien entendu les flasques peuvent être conformés de manière différente à leur périphérie interne pour notamment s'adapter au contour de l'élément de sortie.

Ceci n'est pas gênant car cela conduit à ne pas modifier de manière profonde l'outillage de fabrication des flasques. En effet ceux-ci ont une partie principale identique et la modification de la périphérie interne des flasques se fait par simple modification du diamètre interne des flasques.

Dans une forme de réalisation les organes de fixation (ou d'assemblage), d'orientation axiale, comportent des pions engagés chacun dans un trou complémentaire formé dans le premier voile pour liaison en rotation des flasques avec le premier voile. Ces pions sont issus chacun d'une tête de plus grande taille, ladite tête étant prolongée en direction opposée au pion par un fût traversant des ouvertures prévues à cet effet dans les prolongements externes des flasques. Le fût peut être fileté et dans ce cas un écrou est prévu pour serrer les flasques entre l'écrou et ladite tête et réaliser leur fixation.

En variante le fût est lisse et on procède à un assemblage des flasques avec les organes de fixation par rivetage.

Dans une forme de réalisation les flasques sont prolongés à leur périphérie externe par des oreilles par l'intermédiaire desquelles lesdits flasques se rejoignent et sont accolés pour leur fixation mutuelle par les organes d'assemblage.

D'une manière générale les flasques sont liés cinématiquement au premier voile par leurs oreilles accolées dont les extrémités sont dans le plan du second voile en sorte que les seconds organes élastiques travaillent dans de très bonnes conditions de manière symétrique, lesdites oreilles s'étendant radialement au-dessus du second voile qu'elles prolongent radialement vers l'extérieur.

Dans une forme de réalisation les organes de fixation peuvent constituer une entretoise entre le premier voile et les flasques. Ces organes constituent d'une manière générale des organes d'entraînement du préamortisseur par le premier voile.

Ainsi les flasques sont ménagés car aucun contact n'a lieu entre lesdits flasques et le premier voile.

Cette disposition permet d'éviter également tout contact entre les seconds organes élastiques et le premier voile. Elle permet si désiré d'intercaler une rondelle de frottement entre le premier voile et le flasque le plus près dudit premier voile.

D'une manière générale il est possible de former un sous-ensemble comportant le moyeu (l'élément de sortie) et le préamortisseur, le second voile étant fixé par sertissage sur le moyeu. Ensuite on enfile les pions dans le premier voile.

La description qui va suivre illustre l'invention en regard des dessins annexés dans lesquels :
- la figure 1 est une vue en coupe axiale montrant la partie centrale de l'amortisseur de torsion selon la présente invention ;
- la figure 2 est une vue de face de la rondelle de frottement selon l'invention avec, à l'arrière, son préamortisseur associé, dont les ressorts sont dôtés par simplicité ;
- la figure 3 est une vue partielle de la périphérie externe de l'amortisseur de torsion ;
- la figure 4 est une demi-vue analogue à la figure 3 pour un autre exemple de réalisation.

Dans ces figures les éléments identiques seront affectés des mêmes signes de référence.

L'amortisseur de torsion représenté dans les figures est une friction d'embrayage pour véhicule automobile. Il comporte un élément d'entrée 1, sous forme d'un disque de support portant à fixation sur chacune de ses faces une garniture de friction 10. Ces garnitures 10 sont destinées à être serrées entre les plateaux de pression et de réaction (non visibles) de l'embrayage. L'élément d'entrée 1 est donc propre à être solidarisé en rotation à un arbre menant, ici l'arbre moteur du véhicule. L'amortisseur comporte également un élément de sortie 2 propre à être solidarisé en rotation à un arbre mené, ici l'arbre d'entrée de la boîte de vitesses. Cet élément de sortie 2 consiste ici en un moyeu 2 cannelé intérieurement pour sa liaison en rotation à l'arbre d'entrée de la boîte de vitesses.

L'élément d'entrée 1 est accouplé de manière élastique à l'élément de sortie 2 (moyeu 2) par deux dispositifs amortisseurs de torsion A,B d'action étagée, dont l'un (le dispositif A) est destiné à filtrer les vibrations dans le régime de marche du véhicule, tandis que l'autre (le dispositif B) est moins raide et est destiné à filtrer les vibrations dans le domaine du régime de ralenti du moteur. Ainsi, le dispositif A est dénommé usuellement "amortisseur principal", et le dispositif B "préamortisseur".

L'amortisseur principal A est doté de premiers organes élastiques 13 à action circonférentielle, tandis que le préamortisseur B est doté également de seconds organes élastiques 3 à action circonférentielle, de raideur inférieure à celle des premiers organes élastiques 13.

Ici les organes élastiques 3,13 consistent en des ressorts à boudin mais, bien entendu, en variante, certains de ces organes peuvent consister en des blocs en matière élastique tel que du caoutchouc ou de l'élastomère.

L'amortisseur principal comporte deux rondelles de guidage 11,12 disposées de part et d'autre d'un premier voile 4.

Les ressorts 13 (les premiers organes élastiques) sont montés dans des premiers logements 14,15 pratiqués en vis-à-vis dans le voile 4 et les rondelles de guidage 11,12.

Ici les logements 14, 15 consistent en des fenêtres.

En variante, les logements 14 des rondelles 11,12 peuvent consister en des emboutis et les logements 15 du voile 4 en des échancrures ouvertes radialement vers l'extérieur.

De manière connue les ressorts 13 sont tous logés, ici par paire de ressorts concentriques, sans jeu dans les logements 14. Certains des ressorts 13 sont logés sans jeu dans les logements 15 et d'autres, avec jeu, dans les logements 15 pour une intervention étagée des ressorts 13.

Bien entendu, tous les ressorts 13 peuvent être en variante, tous logés sans jeu dans les logements 15.

Tout cela dépend des applications.

Les rondelles 11,12 et le voile 4 entourent le moyeu 2, mais des moyens d'engrènement à jeu circonférentiel 5 interviennent entre le premier voile 4 et le moyeu 2, tandis que les rondelles 11,12 sont montées libres autour du moyeu 2, ici grâce à un palier 16 intervenant entre la périphérie interne de la rondelle 11 et la périphérie externe du moyeu 2.

Les moyens d'engrènement 5 consistent, de manière connue, en une denture mâle formée à la périphérie interne du voile 4 et en une denture femelle formée à la périphérie externe du moyeu 2 à la faveur d'une bride radiale de celui-ci.

Ici la rondelle 11 présente, à sa périphérie interne, une collerette annulaire d'orientation axiale tournée à l'opposé du voile 4. Le moyeu 2 présente, à sa périphérie externe, une portée tronconique avec laquelle coopère une portée tronconique complémentaire du palier 16 dont la périphérie externe coopère avec la collerette de la rondelle 11.

En variante, le moyeu 2 est dépourvu de portée tronconique et coopère, par l'intermédiaire d'une portée cylindrique de centrage, avec l'alésage interne du palier 16.

Les dentures femelle et mâle des moyens d'engrènement 5 présentent des dents de forme trapézoïdale alternant avec des échancrures de forme trapézoïdale, les dents du voile 4 pénétrant à jeu circonférentiel dans les échancrures du moyeu 2, et vice-versa.

Les dents du moyeu 2 sont allongées axialement et consistent ici en des cannelures présentant, à l'une de leurs extrémités axiales du côté de la rondelle 11, une portion de hauteur réduite délimitant, avec la partie principale des cannelures, un épaulement pour calage axial d'un second voile 6 doté, à sa périphérie interne, d'une denture mâle complémentaire de la denture femelle du moyeu.

L'extrémité axiale de la portion de hauteur réduite des cannelures du moyeu 2 est rabattue radialement vers l'extérieur au contact du second voile 6 calé ainsi axialement et en rotation ainsi par rapport au moyeu 2, dont il est solidaire.

Le second voile 6 appartient au préamortisseur B implanté, d'une part, radialement en dessous des premiers ressorts 13 et, d'autre part, axialement entre la rondelle 11, centrée par le palier 16, et le premier voile 4 avec interposition d'une rondelle de frottement 7, décrite ci-après, entre le préamortisseur B et le premier voile 4.

Le palier 16 présente, d'un seul tenant, un voile d'orientation transversale interposé axialement entre le préamortisseur B et la rondelle de guidage 11.

Une rondelle de frottement 17 et une rondelle élastique à action axiale 18 sont interposées axialement entre le premier voile 4 et l'autre rondelle de guidage 12.

La rondelle 18, ici du type Belleville, en variante une rondelle ondulée, prend appui sur la rondelle 12 pour action sur la rondelle 17 dotée de pions engagés dans des trous complémentaires formés dans la rondelle 12 pour liaison en rotation de la rondelle 17 avec la rondelle 12.

Ainsi la rondelle 18 sollicite la rondelle 17 au contact du voile 4 et permet un serrage axial entre le voile 4 et la rondelle 11 de l'ensemble palier 16 - préamortisseur B - rondelle 7.

De même, une rondelle élastique 28, ici du type Belleville, et une rondelle 27 sont interposées entre la rondelle 12 et la bride du moyeu 2 pour serrage du palier conique 16 entre la rondelle 11 et la portée tronconique du moyeu 2.

La rondelle 27 présente des pions pour sa liaison en rotation avec la rondelle 12 et une rondelle métallique de protection 29 est interposée entre le moyeu 2 (la face transversale concernée de la bride de celui-ci) et la rondelle 27.

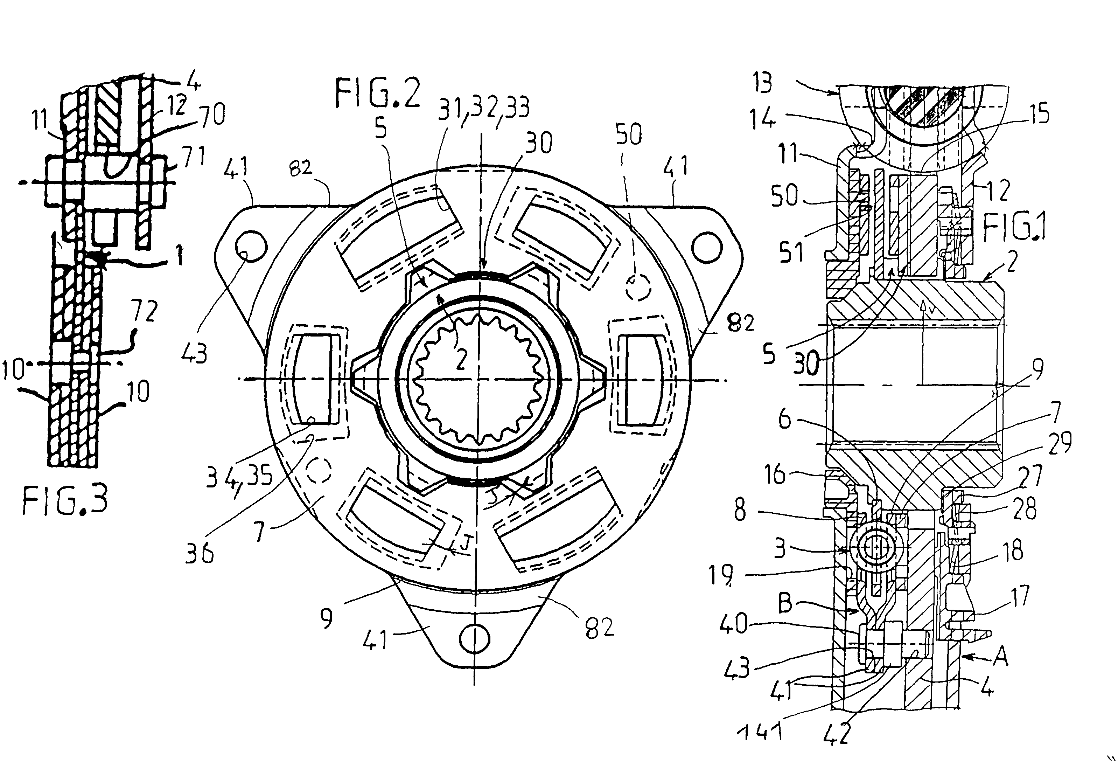

Le préamortisseur B entoure le moyeu 2 et comporte deux flasques 8,9 identiques dans les figures 1 à 3, disposés axialement de part et d'autre du second voile 6. Le flasque 8 est en contact avec le palier 16 (le voile transversal de celui-ci), tandis que le flasque 9 est en contact avec la rondelle 7. Les flasques 8,9 forment des rondelles de guidage et sont appelés ainsi par simplicité, pour éviter toute confusion avec les rondelles de guidage 11,12 de l'amortisseur principal A. Les flasques 8,9 ont bien entendu une taille inférieure à celle desdites rondelles de guidage. Les flasques 8,9 sont ici en tôle emboutie

Les flasques présentent, suivant une caractéristique de l'invention, à leur périphérie externe, en saillie radiale vers les ressorts 13, ici trois oreilles 41 dotées chacune d'un trou de passage 43 d'un organe 40 de fixation et d'entraînement du préamortisseur B par le premier voile 4, les organes 40, d'orientation axiale, présentant chacun, pour ce faire, une extrémité en forme de pion pénétrant de manière complémentaire dans une ouverture 42 du premier voile 4. Les ouvertures 42 consistent ici en des trous cylindriques et les organes 40 en des rivets avec des pions issus de leur tête (figure 1). Ces organes 40 permettent de standardiser les flasques 8,9 et de les rendre identiques.

Les oreilles 41 sont décalées axialement l'une vers l'autre d'un flasque 8 à l'autre 9 à la faveur chacune d'un pli oblique 82 de raccordement avec la périphérie externe de la partie principale du flasque 8,9 concerné.

Les oreilles 41 des flasques 8,9 viennent en contact, mutuellement les unes avec les autres, en étant serrées entre le pied déformé et la tête du rivet 40.

Les flasques 8,9, ici identiques, sont donc liés cinématiquement au premier voile 4 par leurs oreilles 41 accolées, en sorte que les ressorts 3 travaillent de manière symétrique.

Ces oreilles 41 s'étendent radialement au-dessus du second voile 6 selon une caractéristique de l'invention et ce dans le plan du second voile. Ici le plan de jonction des oreilles correspond au plan médian du second voile 6.

Ainsi, dans une première phase, les premiers organes 13, plus raides que les seconds organes 3, ne sont globalement pas comprimés, de sorte que le voile 4 et les rondelles 11,12 forment un sous-ensemble et que les seconds organes 3 sont comprimés, les flasques 8,9, solidaires en rotation du premier voile 4 par les rivets 40, se déplaçant par rapport au second voile 6 solidaire du moyeu 2.

Un frottement apparaît donc entre le moyeu 2 et la portée tronconique du palier 16, ainsi qu'entre la rondelle de frottement 27 et le moyeu 2 avec intervention de la rondelle 29 évitant une usure de la rondelle 27.

Après rattrapage du jeu entre la denture mâle du premier voile 4 et la denture femelle du moyeu 2, le voile 4 devient solidaire en rotation du moyeu 2. Une nouvelle phase débute au cours de laquelle les ressorts 3 restent bandés et les ressorts 13 sont comprimés avec mouvement relatif entre le voile 4 et les rondelles 11,12. Un frottement se produit alors entre la rondelle 17 et le voile 4.

Bien entendu, la charge exercée par la rondelle élastique 18 sur la rondelle 17 est supérieure à la charge exercée par la rondelle élastique 28 sur la rondelle 27, les rondelles 17,18 entourant les rondelles 27,28.

Ici le second voile 6 et les flasques 8,9 sont métalliques, tandis que les rondelles 7, 17, 18 et le palier 16 avec son voile transversal sont en matière plastique moulable, éventuellement renforcée par des fibres, telles que des fibres de verre, et dotée de charges pour obtenir le coefficient de frottement désiré.

Ici on profite du palier 16 pour doter son voile transversal de pions 50 pénétrant, de manière complémentaire, dans des trous 51 que présente, en vis-à-vis le flasque 8. Le palier 16 est ainsi lié en rotation au flasque 8.

Le voile du palier 16 présente des dégagements 19 en regard des ressorts 3 pour réduction de l'encombrement axial.

Ainsi les ressorts 3 pénètrent à jeu circonférentiel dans les dégagements 19 en forme de fenêtres et c'est la raison pour laquelle le palier est lié ici en rotation au flasque 8 par les pions 50 et les trous 51.

Les seconds organes élastiques 3 sont tous montés sans jeu dans des fenêtres 31,34 en vis-à-vis dans les flasques 8 et 9.

Ils sont également montés tous sans jeu dans des fenêtres 33,35 de la rondelle 7 réalisées en vis-à-vis des fenêtres 31,34 des flasques 8,9. Les fenêtres 34,35 sont plus courtes que les fenêtres 31,33.

Les organes élastiques 3 sont, pour deux d'entre eux, diamétralement opposés montés sans jeu dans des fenêtres 32 du second voile 6, pratiquées en vis-à-vis des fenêtres 31,33.

Quatre organes élastiques 3 sont montés à jeu circonférentiel dans des fenêtres 36 pratiquées dans le second voile 6 en vis-à-vis des fenêtres 34,35.

Les fenêtres 36 sont donc plus longues circonférentiellement (figure 2).

Ici les organes 3 sont réparties régulièrement circonférentiellement en étant montés par paires de ressorts à boudin concentriques dans les différentes fenêtres. Il en est de même des organes 13 qui sont montés par paires dans les premiers logements 14,15.

Ainsi la rondelle 7 est dotée de troisièmes moyens de logement 33,35 pour logement des seconds organes élastiques 3, sachant qu'un seul ressort 3 peut être monté par fenêtres 31 à 36.

Par ailleurs, la rondelle de frottement 7 présente une denture mâle 30 à sa périphérie interne engrenant avec la denture femelle du moyeu 2 et ce avec un jeu circonférentiel inférieur J à celui existant entre la denture mâle du premier voile 4 et la denture femelle du moyeu 2, c'est-à-dire inférieur au jeu circonférentiel des moyens d'engrènement à jeu circonférentiel 5.

Avantageusement, ce jeu circonférentiel J est égal à celui existant entre le bord concerné de la fenêtre 36 du second voile 6 et les bords concernés des fenêtres 34,35 du flasque 8,9 et de la rondelle de frottement 7.

Ainsi, lors du débattement angulaire entre le premier voile 4 et le moyeu, les ressorts 3 montés sans jeu dans les fenêtres 31, 32, 33 des flasques 8,9, du second voile 6 et de la rondelle 7 interviennent seul et aucun mouvement relatif ne se produit entre la rondelle de frottement 7 et l'ensemble premier voile 4 - flasques 8,9 liés en rotation par les rivets 40.

Après rattrapage du jeu J, les ressorts 3 montés avec jeu dans les fenêtres 36 du second voile 6 interviennent et sont comprimés.

En même temps la rondelle de frottement 7 est entraînée en rotation par le moyeu 2 du fait que les dents de la rondelle de frottement 7 viennent en prise avec celles du moyeu 2. Un mouvement relatif se produit alors entre la rondelle 7 et l'ensemble premier voile 4 - flasques 8,9. La rondelle 7 frotte donc contre le voile 4 et le flasque 9. Ainsi la venue en prise des dents du premier voile 4 avec celles du moyeu 2 est freinée. Le retour de la rondelle 7 à sa position d'origine est alors réalisée à l'aide des ressorts 3 montés dans les fenêtres 36 du second voile 6.

Ces ressorts 3 se détendent jusqu'à venir en prise, en sens inverse des dents de la rondelle 7, avec celles du moyeu 2. Après les autres ressorts 3 se détendent.

La rondelle 7 est ainsi admise à frotter contre le premier voile 4 et le flasque 9 lors du retour de l'amortisseur de torsion à sa position l'origine.

On obtient ainsi une bonne filtration des vibrations avec intervention d'une partie des ressorts 3 lors d'une première phase, ce qui permet de bien filtrer les vibrations dans le domaine du régime de ralenti du moteur, tout en freinant ultérieurement la venue en prise des dents du premier voile 4 avec celles du moyeu 2 au bénéfice d'une diminution des bruits.

On notera qu'ici l'élément d'entrée 1 consiste en un disque de support accolé à la rondelle de guidage 11 en étant fixé aux rondelles de guidage 11,12 par les colonnettes 71 reliant entre elles les rondelles de guidage 11,12 et traversant, pour ce faire, à jeu circonférentiel, chacune un passage 70 prévu dans le premier voile 4.

Le débattement angulaire entre le voile 4 et les rondelles de guidage 11,12 est dont limité par coopération des entretoises 71 avec le bord latéral concerné du passage 70.

En variante, le débattement est limité par venue à spires jointives des ressorts 13.

De même, le disque de support peut être fixé sur la rondelle 11 à l'aide de rivets distincts des colonnettes 71.

Les garnitures de friction 10, au lieu d'être fixées ici par des rivets 72 sur ledit disque de support, peuvent être fixées par collage sur celui-ci.

Bien entendu, la présente invention n'est pas limitée à l'exemple de réalisation décrit et l'amortisseur de torsion n'est pas forcément une friction d'embrayage.

Par exemple, la rondelle 11 peut être fixée directement sur un plateau solidaire du moteur du véhicule.

Le jeu J (figure 2) existant entre les bords des fenêtres 34, 35 et 36 peut être identique d'un côté et de l'autre, tout cela dépend des applications.

Bien entendu les deux flasques 8,9, au lieu d'être métalliques, peuvent être en matière plastique.

Néanmoins on appréciera que la solution à flasques 8,9 métalliques permet d'avoir des flasques moins épais, ce qui est favorable pour la réduction de l'encombrement axial.

En variante le flasque 8 peut être en matière plastique et frotter directement contre la rondelle 11.

Dans ce cas le palier 16 est dépourvu de voile et est lié en rotation à la rondelle 11 par des pions de manière analogue à la liaison existant entre la rondelle 28 et l'autre rondelle de guidage 12.

Dans ce cas, on n'augmente pas l'encombrement axial Les fenêtres 31,34 des flasques 8,9 peuvent consister en des emboutis pénétrant alors dans les logements 19 et les fenêtres 33,35 de la rondelle de frottement 7.

Cette rondelle 7 peut être métallique suivant le frottement recherché.

Le second voile 6 n'est pas forcément calé axialement sur le moyeu du fait qu'il est serré entre le palier 16 et la rondelle 7.

Dans tous les cas il est au moins solidaire en rotation du moyeu 2, qui peut en variante être fixé, par exemple, par rivetage sur un flasque solidaire de l'arbre mené.

Ainsi qu'on l'aura compris les flasques 8,9 selon l'invention sont globalement identiques. Ces flasques 8,9 sont prolongés à leur périphérie externe par des parties externes 41 décalées axialement l'une vers l'autre par l'intermédiaire desquelles lesdits flasques se rejoignent et sont accolés pour leur fixation mutuelle à l'aide d'organes d'assemblage 41 formant moyens de liaison en rotation entre le premier voile 6 et les flasques 8,9.

Les parties 41 s'étendent radialement au-dessus du second voile, dans le plan de celui-ci et présente chacune, pour leur décalage axial, un pli 82 de raccordement à la partie principale du flasque concerné. Plus précisément les plis 82 se raccordent à la périphérie externe de parties principales des flasques 8,9.

Dans les formes de réalisation des figures 1 à 3, lesdites parties 41 sont constituées par les oreilles 41.

Bien entendu cela dépend des applications.

En effet dans les figures 1 à 3 les oreilles 41 s'étendent entre deux organes élastiques 13 consécutifs de l'amortisseur principal A.

Dans la mesure où ces moyens élastiques 13 sont implantés radialement plus vers l'extérieur, les oreilles 41 peuvent être remplacées par une partie annulaire continue dotée des trous 43 et d'un pli de raccordement au flasque.

Les pions 40 forment les organes de fixation, d'orientation axiale, des flasques 8,9 ainsi que des moyens de liaison en rotation entre le premier voile 4 et les flasques 8,9. Ces pions 40 comportent une partie cylindrique pénétrant dans les trous 42 et formant les pions proprement dits. Ces pions s'érigent à partir d'une tête épaulée 141 de plus grande taille, ici cylindrique, prolongée axialement en direction opposée au premier voile 4 par un fût qui, dans les figures 1 à 3, est lisse. Ces fûts traversent les ouvertures 43 et servent à la fixation par rivetage des parties périphériques 41 des flasques 8,9.

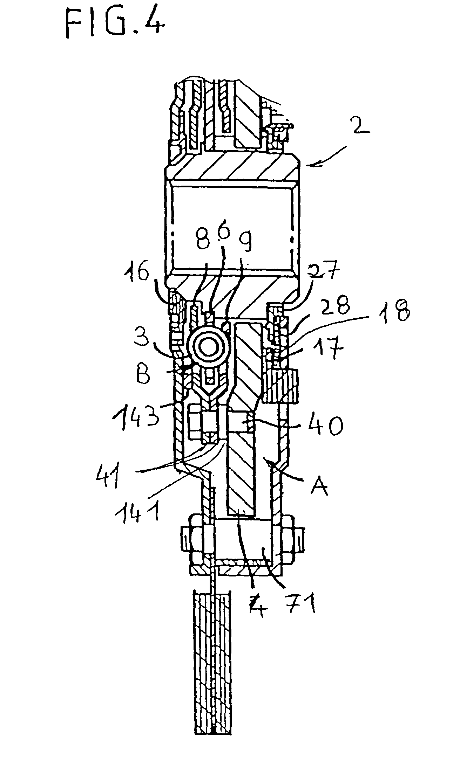

Bien entendu en variante (figure 4), les fûts peuvent être filetés et traverser les ouvertures 43 des flasques 8,9. La fixation des flasques est alors réalisée à l'aide d'un écrou. Les parties externes des flasques sont alors fixées entre les têtes 141 et les écrous.

Les organes 40, au lieu d'être de forme annulaire, peuvent être de section carrée ou rectangulaire, les trous 43 étant formés en conséquence.

La tête de ces organes 41, formant épaulement, peut faire entretoise entre le premier voile 4 et la périphérie externe des flasques 8,9 comme visible dans la figure 4.

Il peut en être de même à la figure 1 en sorte que dans ce cas la rondelle de frottement 7 n'est pas serrée.

Ces flasques 8,9 peuvent être différents au niveau de leur périphérie interne comme visible dans cette figure 4, ceci pour s'adapter au contour du moyeu 2.

Les colonnettes 71 peuvent présenter à chacune de leurs extrémités des parties filetées comme visible dans cette figure 4, dans ce cas il est fait appel à des écrous pour fixer les colonnettes aux rondelles de guidage 11,12.

Les premiers logements 15 du premier voile 4 peuvent être évidés vers l'extérieur. Les ressorts 13 peuvent être montés dans les fenêtres 14 à l'aide de socles. Dans ce cas une voûte peut être prévue à la périphérie externe des rondelles de guidage, une garniture en matière synthétique étant adossée radialement à la surface interne de cette voûte sur une partie au moins de la longueur circonférentielle de celle-ci. Dans ce cas, le nombre de fenêtres 14 des rondelles de guidage 11,12 peut être réduit à trois en sorte que les premiers organes élastiques ont une grande longueur et sont admis, sous l'effet de la force centrifuge, à venir en contact avec ladite garniture synthétique. Avantageusement la voûte est formée par un prolongement annulaire d'orientation axiale, que présente l'une des rondelles de guidage à sa périphérie externe.

Le palier 16 peut être lié en rotation à la rondelle de guidage 11 par des pions (figure 4) et une rondelle 143 peut être interposée axialement entre la rondelle de guidage 11 et le flasque 8. La présence de la rondelle de frottement 7 n'est donc pas obligatoire.

On appréciera que le second voile 6 a une forme simple et qu'il est possible de former un sous-ensemble moyeu 2 - préamortisseur B.

## Revendications

1. Amortisseur de torsion, notamment friction d'embrayage pour véhicule automobile, comportant un élément d'entrée (1) solidaire de deux rondelles de guidage (11, 12) disposées de part et d'autre d'un premier voile (4), des premiers organes élastiques (13) intervenant circonférentiellement entre le premier voile (4) et les rondelles de guidage (11, 12), un élément de sortie (2) entouré par le premier voile (4) et les rondelles de guidage (11, 12), des moyens d'engrènement à jeu circonférentiel (5) intervenant entre la périphérie interne du premier voile (4) et la périphérie externe de l'élément de sortie (2) et comprenant une denture femelle formée dans l'élément de sortie (2) un préamortisseur (B) entourant l'élément de sortie (2) en étant implanté, d'une part, radialement en dessous des premiers organes élastiques (13) et, d'autre part, axialement entre l'une (11) des rondelles de guidage (11, 12) et le premier voile (4), dans lequel ledit préamortisseur comporte deux flasques (8, 9) solidaires en rotation du premier voile (4), un second voile (6) disposé entre les deux flasques (8, 9) en étant solidaire au moins en rotation de l'élément de sortie (2) et des seconds organes élastiques (3), de plus faible raideur que les premiers organes élastiques (13), intervenant circonférentiellement entre le second voile (6) et les deux flasques (8, 9) en étant montés dans des seconds logements (31, 34 - 32, 36) pratiqués en vis-à-vis dans les flasques (8, 9) et le second voile (6), et dans lequel les flasques (8, 9) du préamortisseur sont identiques au moins radialement au-dessus de leurs seconds logements, caractérisé en ce que les dits flasques (8, 9) sont prolongés à leur périphérie externe par des parties externes (41) par l'intermédiaire desquelles lesdits flasques se rejoignent et sont accolés pour leur fixation mutuelle à l'aide d'organes de fixation (41) formant moyens de liaison en rotation entre le premier voile (4) et les flasques (8, 9) et en ce que lesdites parties (41) s'étendent radialement au-dessus du second voile (6), dans le plan de celui-ci.

2. Amortisseur selon la revendication 1, caractérisé en ce que les organes de fixation (40) en direction opposée au premier voile (4) par un fût traversant des ouvertures (43) des parties externes des flasques (8, 9) et en ce que les organes de fixation (40) sont engagés dans un trou complémentaire (42) formé dans le premier voile (4) pour liaison en rotation des flasques (8, 9) avec le premier voile (4).

3. Amortisseur selon la revendication 1 ou 2, caractérisé en ce que les organes de fixation (40) comportent des pions engagés chacun dans un trou complémentaire (42) formé dans le premier voile (4) pour liaison en rotation des flasques (8, 9) avec le premier voile (4).

4. Amortisseur selon la revendication 3, caractérisé en ce que ces pions sont issus chacun d'une tête (141), ladite tête étant prolongée en direction opposée au pion par un fût traversant une ouverture (43) prévue à cet effet dans les parties externes (41) des flasques (8, 9) pour fixation desdits flasques.

5. Amortisseur selon la revendication 2 ou 4, caractérisé en ce que la fixation des flasques (8, 9) est réalisée par rivetage à l'aide des fûts.

6. Amortisseur selon l'une quelconque des revendications 1 à 5, caractérisé en ce que lesdites parties externes (41) sont décalées axialement l'une vers l'autre à la faveur d'un pli de raccordement (82) à la périphérie externe de la partie principale du flasque (8, 9) concerné.

7. Amortisseur selon l'une quelconque des revendications 1 à 6, caractérisé en ce que les flasques (8, 9) sont prolongés à leur périphérie externe par des oreilles (41) par l'intermédiaire desquelles les flasques se rejoignent et sont accolés pour leur fixation mutuelle par les organes d'assemblage (40).

8. Amortisseur selon la revendication 7, caractérisé en ce que les oreilles (41) s'étendent entre deux premiers organes élastiques (13) consécutifs.

9. Amortisseur selon l'une quelconque des revendications 1 à 8, caractérisé en ce que les organes d'assemblage (40) constituent une entretoise entre le premier voile (4) et les flasques (8, 9).

10. Amortisseur selon l'une quelconque des revendications 1 à 9, caractérisé en ce qu'une rondelle de frottement (7) est interposée axialement entre le premier voile (4) et le flasque (9) concerné du préamortisseur (B), et en ce que la rondelle de frottement (7), d'une part, présente à sa périphérie interne une denture mâle (30) engrenant avec la denture femelle de l'élément de sortie (2) avec un jeu circonférentiel (J) inférieur à celui desdits moyens d'engrènement à jeu (5) et, d'autre part, présente des troisièmes logements (33, 35) pour montage sans jeu circonférentiel des seconds organes élastiques (3) du préamortisseur (B) dont certains sont montés avec jeu circonférentiel dans les seconds logements (36) du second voile (6).

## Patentansprüche

1. Torsionsdämpfer, insbesondere Reibungskupplungsscheibe für Kraftfahrzeuge, umfassend ein Eingangselement (1), das fest mit zwei beiderseits einer ersten Zwischenscheibe (4) angeordneten Führungsscheiben (11, 12) verbunden ist, umfangsmäßig zwischen der ersten Zwischenscheibe (4) und den Führungsscheiben (11, 12) wirksame erste elastische Organe (13), ein von der ersten Zwischenscheibe (4) und den Führungsscheiben (11, 12) umgebenes Ausgangselement (2), mit Umfangsspiel wirksame Eingriffsmittel (5), die zwischen dem inneren Umfang der ersten Zwischenscheibe (4) und dem äußeren Umfang des Ausgangselements (2) zum Einsatz kommen und eine im Ausgangselement (2) ausgebildete Aufnahmezahnung umfassen, einen Vordämpfer (B), der das Ausgangselement (2) umgibt und der einerseits radial unterhalb der ersten elastischen Organe (13) und andererseits axial zwischen einer (11) der Führungsscheiben (11, 12) und der ersten Zwischenscheibe (4) angeordnet ist, wobei der besagte Vordämpfer zwei drehfest mit der ersten Zwischenscheibe (4) verbundene Flansche (8, 9) umfaßt, eine zweite Zwischenscheibe (6), die zwischen den beiden Flanschen (8, 9) angeordnet und mit dem Ausgangselement (2) wenigstens drehfest verbunden ist, und zweite elastische Organe (3) mit geringerer Steifigkeit als die ersten elastischen Organe (13), die umfangsmäßig zwischen der zweiten Zwischenscheibe (6) und den beiden Flanschen (8, 9) zum Einsatz kommen und in gegenüberliegend in die Flansche (8, 9) und die zweite Zwischenscheibe (6) eingearbeiteten zweiten Aufnahmen gelagert (31, 34 - 32, 36) sind, und wobei die Flansche (8, 9) des Vordämpfers wenigstens radial oberhalb ihrer zweiten Aufnahmen identisch sind, **dadurch gekennzeichnet**, daß die besagten Flansche (8, 9) an ihrem äußeren Umfang durch äußere Teile (41) verlängert werden, über die sich die besagten Flansche aneinander anschließen und für ihre wechselseitige Befestigung anhand von Befestigungsorganen (41) angefügt sind, die Mittel zur drehfesten Verbindung zwischen der ersten Zwischenscheibe (4) und den Flanschen (8, 9) bilden, und daß sich die besagten Teile (41) radial oberhalb der zweiten Zwischenscheibe (6) in deren Ebene erstrekken.

2. Dämpfer nach Anspruch 1, **dadurch gekennzeichnet**, daß die Befestigungsorgane (40) in der zur ersten Zwischenscheibe (4) entgegengesetzten Richtung durch einen Schaft verlängert werden, der durch Öffnungen (43) der äußeren Teile der Flansche (8, 9) hindurchgeht, und daß die Befestigungsorgane (40) in ein formschlüssiges Loch (42) eingesetzt sind, das in die erste Zwischenscheibe (4) eingearbeitet ist, um die drehfeste Verbindung der Flansche (8, 9) mit der ersten Zwischenscheibe (4) herbeizuführen.

3. Dämpfer nach Anspruch 1 oder 2, **dadurch gekennzeichnet**, daß die Befestigungsorgane (40) Stifte umfassen, die jeweils in ein formschlüssiges Loch (42) eingesetzt sind, das in der ersten Zwischenscheibe (4) ausgebildet ist, um die drehfeste Verbindung der Flansche (8, 9) mit der ersten Zwischenscheibe (4) herbeizuführen.

4. Dämpfer nach Anspruch 3, **dadurch gekennzeichnet**, daß die Stifte jeweils von einem Kopf (141) ausgehen, wobei der besagte Kopf in der zum Stift entgegengesetzten Richtung durch einen Schaft verlängert wird, der durch eine Öffnung (43) hindurchgeht, die dazu in den äußeren Teilen (41) der Flansche (8, 9) vorgesehen ist, um die besagten Flansche zu befestigen.

5. Dämpfer nach Anspruch 2 oder 4, **dadurch gekennzeichnet**, daß die Befestigung der Flansche (8, 9) durch Aufnieten anhand der Schäfte erfolgt.

6. Dämpfer nach einem der Ansprüche 1 bis 5, **dadurch gekennzeichnet**, daß die besagten äußeren Teile (41) mittels einer Anschlußbiegung (82) zum Anschluß an den äußeren Umfang des Hauptteils des betreffenden Flansches (8, 9) axial zueinander versetzt sind.

7. Dämpfer nach einem der Ansprüche 1 bis 6, **dadurch gekennzeichnet**, daß die Flansche (8, 9) an ihrem äußeren Umfang durch Lappen (41) verlängert werden, über die sich die Flansche aneinander anschließen und für ihre wechselseitige Befestigung durch die Verbindungsorgane (40) angefügt sind.

8. Dämpfer nach Anspruch 7, **dadurch gekennzeichnet**, daß sich die Lappen (41) zwischen zwei aufeinanderfolgenden ersten elastischen Organen (13) erstrecken.

9. Dämpfer nach einem der Ansprüche 1 bis 8, **dadurch gekennzeichnet**, daß die Verbindungsorgane (40) ein Abstandsstück zwischen der ersten Zwischenscheibe (4) und den Flanschen (8, 9) bilden.

10. Dämpfer nach einem der Ansprüche 1 bis 9, **dadurch gekennzeichnet**, daß eine Reibscheibe (7) axial zwischen der ersten Zwischenscheibe (4) und dem betreffenden Flansch (9) des Vordämpfers (B) eingefügt ist und daß die Reibscheibe (7) einerseits an ihrem inneren Umfang eine vorstehende Zahnung (30) aufweist, die mit der Aufnahmezahnung des Ausgangselements (2) mit einem Umfangsspiel (J) in Eingriff steht, das kleiner als dasjenige der mit Umfangsspiel wirksamen Eingriffsmittel (5) ist, und andererseits dritte Aufnahmen (33, 35) für die ohne Umfangsspiel erfolgende Lagerung der zweiten elastischen Organe (3) des Vordämpfers (B) aufweist, von denen einige mit Umfangsspiel in den zweiten Aufnahmen (36) der zweiten Zwischenscheibe (6) gelagert sind.

## Claims

1. A torsion damper, in particular a friction clutch for a motor vehicle, comprising an input element (1) fixed to two guide rings (11, 12) which are disposed on either side of a first damper plate (4), first resilient means (13) operatively interposed circumferentially between the first damper plate (4) and the guide rings (11, 12), an output element (2) surrounded by the first damper plate (4) and the guide rings (11, 12), loose coupling means (5) with a circumferential clearance, interposed operatively between the inner periphery of the first damper plate (4) and the outer periphery of the output element (2), and comprising a female set of teeth formed in the output element (2), and a predamper (B) surrounding the output element (2) and fitted, firstly, radially inward of the first resilient members (13), and secondly, axially between one (11) of the guide rings (11, 12) and the first damper plate (4), wherein the said predamper comprises two radial plates (8, 9) fixed in rotation to the first damper plate (4), a second damper plate (6) disposed between the two radial plates (8, 9) and being fixed, at least in rotation, to the output element (2), and second resilient means (3), which, being less stiff than the first resilient means (13) and working circumferentially between the second damper plate (6) and the two radial plates (8, 9), are mounted in second housings (31, 34 - 32, 36) formed in facing relationship in the radial plates (8, 9) and the second damper plate (6), and wherein the radial plates (8, 9) of the predamper are identical, at least radially outward of their second housings, characterised in that the said radial plate (8, 9) are extended at their outer periphery by external portions (41) through which the said radial plates are joined together, and are attached for their mutual fastening with the aid of fastening members (40) constituting rotary coupling means between the first damper plate (4) and the radial plates (8, 9), and in that the said portions (41) extend radially outward of the second damper plate (6), in the plane of the latter.

2. A damper according to Claim 1, characterised in that the fastening members (40) are defined by a shank extending, in a direction away from the first damper plate (4), through apertures (43) in the external portions of the radial plates (8, 9), and in that the fastening members (40) are engaged in a complementary hole (42) formed in the first damper plate (4) so as to couple the radial plates (8, 9) in rotation with the first damper plate (4) .

3. A damper according to Claim 1 or Claim 2, characterised in that the fastening members (40) include spigots each of which is engaged in a complementary hole (42) formed in the first damper plate (4), for coupling the radial plates (8, 9) in rotation with the first damper plate (4).

4. A damper according to Claim 3, characterised in that each of the said spigots projects from a head (141), the said head being extended away from the spigot by a shank portion extending through an aperture (43) formed for that purpose in the external portions (41) of the radial plates (8, 9), whereby to secure the said radial plates.

5. A damper according to Claim 2 or Claim 4, characterised in that the fastening of the radial plates (8, 9) is obtained by riveting, with the aid of the shank portions.

6. A damper according to any one of Claims 1 to 5, characterised in that the said external portions (41) are offset axially one towards the other, by means of a connecting bend portion (82) at the outer periphery of the main part of the radial plate (8, 9) concerned.

7. A damper according to any one of Claims 1 to 6, characterised in that the radial plates (8, 9) are extended at their outer periphery by ears (41), by means of which the radial plates are joined together and are attached for their mutual fastening by the assembly members (40).

8. A damper according to Claim 7, characterised in that the ears (41) are disposed between two consecutive resilient members (13) .

9. A damper according to any one of Claims 1 to 8, characterised in that the assembly members (40) constitute a spacer between the first damper plate (4) and the radial plates (8, 9).

10. A damper according to any one of Claims 1 to 9, characterised in that a friction ring (7) is interposed axially between the first damper plate (4) and the appropriate radial plate (9) of the predamper (B), and in that the friction ring (7), firstly, has at its inner periphery a male set of teeth (30) meshing with the female set of teeth of the output element (2), with a circumferential clearance (J) which is smaller than that of the said loose coupling means (5), and secondly, has third housings (33, 35) for mounting without any circumferential clearance second resilient members (3) of the predamper (B), some of which are mounted with a circumferential clearance in the second housings (36) of the second damper plate (6).
